# EUROPÄISCHE PATENTSCHRIFT

(11) **EP 2 724 059 B1**
(45) Veröffentlichungstag und Bekanntmachung des Hinweises auf die Patenterteilung: **08.05.2019**
(21) Anmeldenummer: 12727241.7
(22) Anmeldetag: 16.03.2012
(51) Int. Cl.: F16J 15/32, B60K 15/05, H02K 5/10, H02K 7/06

(54) **STELLANTRIEB FÜR EIN KRAFTFAHRZEUG UND VERFAHREN**
ACTUATING DRIVE FOR A MOTOR VEHICLE AND METHOD
ACTIONNEUR DESTINÉ À UN VÉHICULE AUTOMOBILE ET PROCÉDÉ

(30) Priorität: 26.05.2011 DE 102011076560
(43) Veröffentlichungstag der Anmeldung: 30.04.2014
(73) Patentinhaber: Kiekert Aktiengesellschaft, 42579 Heiligenhaus (DE)
(72) Erfinder: KUNST, Frank, 59348 Lüdinghausen (DE); BASAVARAJAPPA, Madhu, S., 40470 Düsseldorf (DE)
(74) Vertreter: Struck, Norbert
(86) Internationale Anmeldenummer: PCT/DE2012/000286
(87) Internationale Veröffentlichungsnummer: WO 2012/159595

(56) Entgegenhaltungen:
- EP-A1- 1 006 305
- DE-A1-102010 039 916
- GB-A- 1 148 885

## Beschreibung

Die Erfindung betrifft einen Stellantrieb vorzugsweise für ein Kraftfahrzeug mit den Merkmalen des Oberbegriffs des Anspruchs 1 sowie ein Montageverfahren.

Die gattungsgemäße Druckschrift DE 102 59 465 A1 offenbart einen Stellantrieb für ein Tankklappenschloss eines Kraftfahrzeugs mit einem Elektromotor, der eine Spindel zu drehen vermag. Eine Drehbewegung der Spindel bewirkt eine lineare Verschiebung eines Riegels. Der Riegel wird durch einen Faltenbalg nach außen abgedichtet, um den Stellantrieb vor Feuchtigkeit und Verschmutzung zu schützen.

Die Druckschrift DE 102 14 398 A1 offenbart einen Stellantrieb mit einem Formgedächtniselement.

Aus der nicht vorveröffentlichten deutschen Patentanmeldung 10 2010 003 523.8 geht eine Verriegelungseinrichtung mit einem Stellglied, also einem Stellantrieb mit einem Riegel hervor, wobei der Stellantrieb an einer Gehäusewand eines ersten Bauteils angebracht ist. Ein zweites Bauteil weist eine zweite Gehäusewand auf. Zwecks Verriegelung wird die Gehäusewand des zweiten Bauteils in eine Öffnung der Gehäusewand des ersten Bauteils hineingeschoben. Anschließend wird der Riegel des Stellglieds durch ein Loch der Gehäusewand des ersten Bauteils hindurch geschoben und weiter in ein Loch oder in eine Ausnehmung der benachbarten Gehäusewand des zweiten Bauteils hinein, um so die beiden Bauteile miteinander zu verriegeln.

Insbesondere auf dem Gebiet von Kraftfahrzeugen muss ein Stellantrieb vielen verschiedenen Anforderungen gewachsen sein, da ein Kraftfahrzeug in der Regel keinen großen Bauraum erlaubt, sehr unterschiedlichen klimatischen Bedingungen ausgesetzt ist sowie mechanisch durch Stöße und Beschleunigungen stark beansprucht wird.

Es ist Aufgabe der Erfindung, einen Stellantrieb zu schaffen, der für einen Einsatz in einem Kraftfahrzeug gut geeignet ist.

Zur Lösung der Aufgabe umfasst ein Stellantrieb die Merkmale des ersten Anspruchs und/ oder die Merkmale gemäß ein oder mehreren Nebenansprüchen. Vorteilhafte Ausgestaltungen ergeben sich aus den Unteransprüchen.

Der Stellantrieb nach Anspruch 1 weist einen Riegel auf, der zwischen zwei verschiedenen Stellungen hin und her bewegt werden kann und zwar grundsätzlich aus einem abgedichteten Gehäuse des Stellantriebs zumindest teilweise heraus sowie hinein. Der Riegel ist insbesondere zumindest im Wesentlichen stiftförmig, bolzenförmig oder zylinderförmig. Ein Ende des Riegels, das aus dem Gehäuse heraus bewegt werden kann, kann rampenförmig sein, um den Riegel mithilfe der Rampe in Richtung Gehäuse zurück drücken zu können, wie dies von einer Falle eines Türschlosses bekannt ist. In einer Ausführungsform kann der Riegel gegen eine Federkraft einer vorgespannten Feder in Richtung Gehäuse bewegt werden. Mithilfe der optional vorgesehenen Feder kann der Riegel zumindest teilweise wieder aus dem Gehäuse heraus bewegt werden. Der Stellantrieb kann aber auch alternativ oder ergänzend eine Drehbewegung durchführen, um von einer Stellung in eine andere Stellung bewegt zu werden.

Der Stellantrieb umfasst einen Antrieb, mit dem der Riegel bewegt werden kann. Es handelt sich insbesondere um einen elektrischen Antrieb, der beispielsweise einen Elektromotor oder einen Antrieb auf Basis einer Formgedächtnislegierung umfasst. Die vorgenannte, optional vorgesehene Feder kann ebenfalls als Antrieb vorgesehen sein.

Der Stellantrieb umfasst eine aus verformbarem Material bestehende Ringdichtung, durch die der Riegel hindurchgeführt ist. Das Material der Ringdichtung verhält sich insbesondere elastisch. Es handelt sich also vorzugsweise um ein Elastomer, aus dem die Ringdichtung besteht. Die Ringdichtung trägt dazu bei, das Innere des Gehäuses des Stellantriebs nach außen abzudichten, um zu vermeiden, dass Staub oder Feuchtigkeit in den Innenraum des Gehäuses gelangen kann. Um diese abdichtende Wirkung besonders zuverlässig zu erzielen, weist die Ringdichtung einen X -förmigen Querschnitt auf oder liegt zumindest mit wenigstens zwei sich bandförmig oder linienförmig erstreckenden Bereichen umlaufend an dem Riegel dicht an. Ein solcher Querschnitt bzw. ein solches dichtes Anliegen hat sich als besonders vorteilhaft herausgestellt und zwar insbesondere im Vergleich zu üblichen kreisförmigen Querschnitten von Ringdichtungen. Der Querschnitt kann darüber hinaus einem Rechteck oder einem Quadrat ähneln. Abweichend von einem Rechteck oder einem Quadrat verlaufen Seiten des Querschnitts grundsätzlich bogenförmig und/ oder abgewinkelt nach innen, damit der Querschnitt einem X ähnelt. Vorzugsweise verläuft der Querschnitt insgesamt ausschließlich bogenförmig und weist also keine Abwinkelungen auf. Hierdurch wird verbessert sichergestellt, dass der Dichtring durch Kompression nicht beschädigt werden kann. Durch den X-förmigen Querschnitt bzw. das zweifache dichte Anliegen wird die Zahl der Bereiche erhöht, die zur Abdichtung beitragen. Es wird daher eine besonders zuverlässige Dichtwirkung erzielt.

Um eine besonders gute abdichtende Wirkung zu erzielen, befindet sich die Ringdichtung in einer Ausführungsform innerhalb einer Doppelwand des Gehäuses und zwar beispielsweise in gepresster Form. So kann es erforderlich sein, die Ringdichtung zusammen zu drücken, um diese zwischen die beiden Wände der Doppelwand bringen zu können. Aufgrund der X-Form des Querschnitts der Ringdichtung liegt diese dann bandförmig oder linienförmig an den angrenzenden Wänden der Doppelwand an. An jeder Wand gibt es dann zwei Bereiche des Dichtrings, die band- oder linienförmig sowie umlaufend und zwar in der Regel ringförmig dicht an den beiden Wänden der Doppelwand anliegen.

In einer Ausführungsform der Erfindung gibt es einen Wandbereich, der die Ringdichtung in Richtung Riegel presst oder drückt. Aufgrund der X-Form des Querschnitts gibt es dann wiederum zwei umlaufende und zwar in der Regel ringförmig umlaufende bandförmige oder linienförmige Bereiche des Dichtrings, die gegen diesen Wandbereich gepresst sind. In einer Ausführungsform der Erfindung presst oder drückt der genannte Wandbereich die Ringdichtung derart in Richtung Riegel, dass zugleich umlaufende bandförmige oder linienförmige Bereiche der Ringdichtung gegen angrenzende Wände einer Doppelwand des Gehäuses gedrückt werden und so weiter verbessert zu einer Dichtwirkung beitragen.

Der Innendurchmesser der Ringdichtung ist in einer Ausführungsform kleiner als der Außendurchmesser des Riegels und zwar derart, dass die Ringdichtung gepresst an dem Riegel anliegt, wenn der Riegel durch die Ringdichtung hindurch führt. Es gibt dann wiederum zwei bandförmige oder linienförmige Bereiche des Dichtrings, die dicht und umlaufend und zwar in der Regel ringförmig an dem Riegel anliegen.

Der Riegel ist in einer Ausführungsform durch eine Öffnung des Gehäuses hindurchgeführt, die durch einen einstückigen Wandbereich des Gehäuses gebildet ist. Durch die Einstückigkeit wird das Auftreten einer undichten Stelle im besonders kritischen Bereich der Riegeldurchführung besonders zuverlässig vermieden. Zur Erzielung dieser Wirkung ist es nicht erforderlich, dass die Ringdichtung einen X - förmigen Querschnitt aufweist und / oder mit wenigstens zwei bandförmigen oder linienförmigen Bereichen umlaufend an dem Riegel dicht anliegt, um so zu verhindern, dass Staub oder Feuchtigkeit in das Innere des Gehäuses des Stellantriebs gelangen kann.

Das Gehäuse des Stellantriebs wird durch zwei Gehäuseschalen gebildet, die mithilfe einer umlaufenden Dichtung dicht miteinander verbunden sind. Die umlaufende Dichtung kann in eine umlaufende Nut einer Gehäuseschale eingelegt sein oder in eine solche umlaufende Nut hineingespritzt worden sein. Die beiden Gehäuseschalen können beispielsweise durch Schraubverbindungen oder Nietverbindungen miteinander dicht verbunden sein und bilden so ein dichtes Gehäuse, in welches kein Staub oder Nässe eindringen kann.

Ein gattungsgemäßer Stellantrieb weist in einer Ausführungsform eine weitere Ringdichtung auf, die mit ihrem Innendurchmesser an zwei Gehäuseschalen des Gehäuses anliegt und die um eine Öffnung herum geführt ist, durch die der Riegel hindurch reicht. Die weitere Ringdichtung kann dazu dienen, eine dichte Verbindung zu einem weiteren Bauteil zu schaffen, an dem der Stellantrieb angebracht ist, so zum Beispiel in der in der deutschen Patentanmeldung 10 2010 003 523.8 beschriebenen Weise. Die weitere Ringdichtung trägt unabhängig davon dafür Sorge, die beiden Gehäuseschalen verbessert zusammen zu halten und zwar gerade in dem besonders kritischen Bereich, der dem Durchtritt des Riegels dient und der bereits deshalb mechanisch besonders belastet wird. Insbesondere liegt die weitere Ringdichtung an dem Wandbereich an, der die erstgenannte, an den Riegel angrenzende Ringdichtung in Richtung Riegel presst oder drückt. Die weitere Ringdichtung trägt dann dazu bei, dass die an den Riegel angrenzende Ringdichtung besonders zuverlässig abdichtet. Zur Erzielung dieser Wirkung ist es nicht erforderlich, dass die Ringdichtung, die an dem Riegel anliegt, einen X - förmigen Querschnitt aufweist und / oder mit wenigstens zwei bandförmigen oder linienförmigen Bereichen umlaufend an dem Riegel dicht anliegt.

Die weitere Ringdichtung liegt bevorzugt an einem Wandbereich des Gehäuses an, der von dem Wandbereich vorzugsweise senkrecht absteht, der um die Öffnung für den Riegel herum geführt ist. Wird der Stellantrieb gegen die Wand eines weiteren Bauteils gepresst so zum Beispiel in der in der deutschen Patentanmeldung 10 2010 003 523.8 beschriebenen Weise, so befindet sich die weitere Ringdichtung zwischen dem abstehenden Wandbereich und der Wand des weiteren Bauteils und trägt so zu einer dichten Verbindung zu der Wand des weiteren Bauteils bei. Die weitere Ringdichtung liegt dann dicht sowie umlaufend an dem abstehenden Wandbereich sowie dicht an der Wand des weiteren Bauteils an. Zwischen diese beiden Wandbereiche kann dann keine Feuchtigkeit oder Staub gelangen. Der Schutz vor Feuchtigkeit oder Verschmutzung wird so weiter verbessert sichergestellt.

Die weitere Ringdichtung weist bevorzugt im nicht gespannten Zustand einen kleineren Innendurchmesser auf im Vergleich zu dem Durchmesser der Wandung, an der der Innendurchmesser der weiteren Ringdichtung anliegt. Die weitere Ringdichtung ist damit durch Dehnung vorgespannt, wenn diese montiert worden ist und übt folglich einen Druck in Richtung der Wandung aus, an der der Innendurchmesser anliegt. Diese Ausführungsform unterstützt weiter verbessert, dass kein Staub oder Feuchtigkeit in den Innenraum des Stellantriebs gelangen kann.

In einer Ausführungsform weist der Stellantrieb eine Verbindungseinrichtung für ein Verbinden mit einem weiteren Bauteil auf. Es handelt sich dabei insbesondere um eine Bajonettverbindungseinrichtung, durch die der Riegel hindurchgeführt ist. Alternativ kann auch eine Gewindeverbindungseinrichtung vorgesehen sein, so zum Beispiel in Form eines Außengewindes, durch welches der Riegel hindurchgeführt ist. Allerdings ist eine Bajonettverbindungseinrichtung zu bevorzugen, da eine solche Verbindung schneller hergestellt werden kann und nach Herstellung der Verbindung die betroffenen Bauteile zueinander in stets gleicher, vorhersehbarer Weise zueinander ausgerichtet sind. Der Bauraum, der für eine Anbringung an einem weiteren Bauteil erforderlich ist, wird so minimiert und zwar vor allem auch sowohl im Fall der Bajonettverbindungseinrichtung als auch im Fall der Gewindeverbindungseinrichtung. Zur Erzielung dieser Wirkung ist es nicht erforderlich, dass die Ringdichtung einen X - förmigen Querschnitt aufweist und / oder mit wenigstens zwei bandförmigen oder linienförmigen Bereichen umlaufend an dem Riegel dicht anliegt.

In einer Ausführungsform weist der Stellantrieb einen Riegel auf, der durch Formschluss mit einem Schlitten des Stellantriebs verbunden ist. In Abhängigkeit von seiner Verwendung weist ein Riegel eines Stellantriebs zweckmäßigerweise verschiedene Formen auf, so zum Beispiel ein rampenförmiges, aus dem Gehäuse heraus bewegbares Ende in einem Fall und ein Zylinder förmiges, aus dem Gehäuse heraus bewegbares planes Ende in einem anderen Fall. Um den technischen Aufwand zu minimieren, der für das Bereitstellen von unterschiedlichen Formen eines solchen Riegels betrieben werden muss, wird dieser vorzugsweise durch Formschluss mit einem Schlitten verbunden. Das individuell herzustellende Bauteil, also der Riegel ist so einerseits besonders klein und kann andererseits leicht ausgetauscht werden. Zur Erzielung der in diesem Absatz genannten Wirkungen ist es nicht erforderlich, dass die Ringdichtung einen X - förmigen Querschnitt aufweist und / oder mit wenigstens zwei bandförmigen oder linienförmigen Bereichen umlaufend an dem Riegel dicht anliegt.

Die Formschlussverbindung zwischen dem Schlitten und dem Riegel ist in einer Ausführungsform durch eine Nut im Riegel sowie durch einen in die Nut hineinreichenden Wandbereich des Schlittens gebildet. Die Nut verläuft insbesondere ringförmig um den Riegel herum. Der in die Nut reichende Wandbereich ist vorzugsweise halbkreisförmig oder U-förmig ausgestaltet, um für einen guten Halt besonders geeignet in die Nut hineinreichen zu können und andererseits ohne großen technischen Aufwand in die Nut eingesetzt werden zu können. Diese Ausführungsform ermöglicht ein besonders einfaches Zusammenbauen von Riegel und Schlitten und zugleich eine langlebige formschlüssige Verbindung zwischen diesen beiden Teilen.

In einer Ausführungsform befindet sich ein Ring aus elastischem Material in der Nut des Riegels und wird von dieser gehalten. Der Ring ist insbesondere gegen den in die Nut hineinreichenden Wandbereich des Schlittens gedrückt. Hierdurch wird erreicht, dass der Riegel mit dem Schlitten spielfrei verbunden ist oder ein Spiel zumindest minimiert ist. Der Riegel kann entsprechend präzise in gewünschte Stellungen bewegt werden.

Der Stellantrieb umfasst in einer Ausführungsform eine drehbar gelagerte Spindel für das Bewegen des Riegels sowie bevorzugt wenigstens zwei unterschiedlichen Lagerungen für die Spindel. Vorzugsweise gibt es drei Lagerungen für eine drehbare Lagerung der Spindel. Zwei der drei Lagerungen befinden sich dann in einer Ausführungsform vor und hinter einem Antriebsrad, welches dem Antrieb der Spindel dient und mit dieser bevorzugt einstückig verbunden ist, um die Zahl der eingesetzten Teile gering zu halten. Diese beiden Lagerungen grenzen bevorzugt an das Antriebsrad und/ oder an eine optional vorgesehene Federkassette an. Zwischen einer solchen angrenzenden Lagerung und dem Antriebsrad kann also noch eine Federkassette vorgesehen sein oder zumindest ein Freiraum für eine solche Federkassette, um die Spindel mithilfe einer in der Kassette befindlichen vorgespannten Feder in eine Richtung drehen zu können. Eine dritte Lagerung befindet sich in einer Ausführungsform an dem Ende der Spindel, welches in Richtung Riegel weist. Durch Vorsehen von drei Lagerungen kann die Spindel besonders zuverlässig dauerhaft gelagert werden. Dies gilt insbesondere für den Fall der vorgenannten Anordnung der drei Lagerungen.

Ein Drehen der Spindel bewirkt in der Regel eine lineare Bewegung des Riegels. Insbesondere ist die Spindel dann mit ihrem Außengewinde durch ein korrespondierendes Innengewinde eines drehfest gelagerten Schlittens hindurchgeführt, um so den gewünschten Bewegungsablauf zu erzielen. Mit dem Schlitten ist der Riegel verbunden. Eine Drehung der Spindel verschiebt den Schlitten und damit den Riegel linear.

In einer Ausführungsform sind wenigstens ein Ende der Spindel, vorzugsweise beide Enden der Spindel durch eine Lagerung drehbar gehalten. Eine dritte Lagerung kann sich zwischen den beiden Lagerungen befinden, insbesondere um die Lage eines Antriebsrads zu stabilisieren. Auch diese Ausführungsform sichert besonders zuverlässig eine langlebige Lagerung der Spindel.

Eine Lagerung der Spindel bildet in einer Ausführungsform eine Führung für einen Schlitten und zugleich einen Anschlag für den Schlitten und / oder den Riegel, der durch eine Drehung der Spindel linear bewegt wird. In dieser Ausführungsform übernimmt eine Lagerung wenigstens eine Doppelfunktion oder sogar eine Dreifachfunktion und trägt damit dazu bei, dass der Bauraum des Stellantriebs gering ist und die Zahl der eingesetzten Teile gering ist.

In einer Ausführungsform reicht die vorgenannte Lagerung in ein Langloch des Schlittens hinein und trägt so dafür Sorge oder zumindest dazu bei, dass der Schlitten drehfest sowie verschiebbar gelagert ist. Der Stellantrieb dient insbesondere der Verriegelung einer Klappe eines Kraftfahrzeugs, so zum Beispiel der Verriegelung einer Tankklappe oder einer Klappe, die eine Ladeeinrichtung eines Elektrofahrzeugs verdecken kann. Dient der Stellantrieb der Verriegelung einer solchen Klappe, so weist er bevorzugt ein rampenförmiges Ende auf. Wird die Klappe verschlossen, so wird dadurch das rampenförmige Ende mechanisch in Richtung des Gehäuses des Stellantriebs gedrückt und zwar bevorzugt gegen eine Kraft einer vorgespannten Feder. Hat die Klappe ihre geschlossene Endstellung erreicht, so springt der Riegel aufgrund der vorgespannten Feder in die Ausgangsstellung zurück, wodurch dann die Klappe verriegelt ist. Soll die Klappe wieder geöffnet werden, so wird der Riegel durch einen Antrieb zurück bewegt also in Richtung des Gehäuses des Stellantriebs. Es handelt sich dabei insbesondere um einen elektrischen Antrieb.

Weitere Einzelheiten und Vorteile ergeben sich aus der nachfolgenden Beschreibung nebst Figuren.

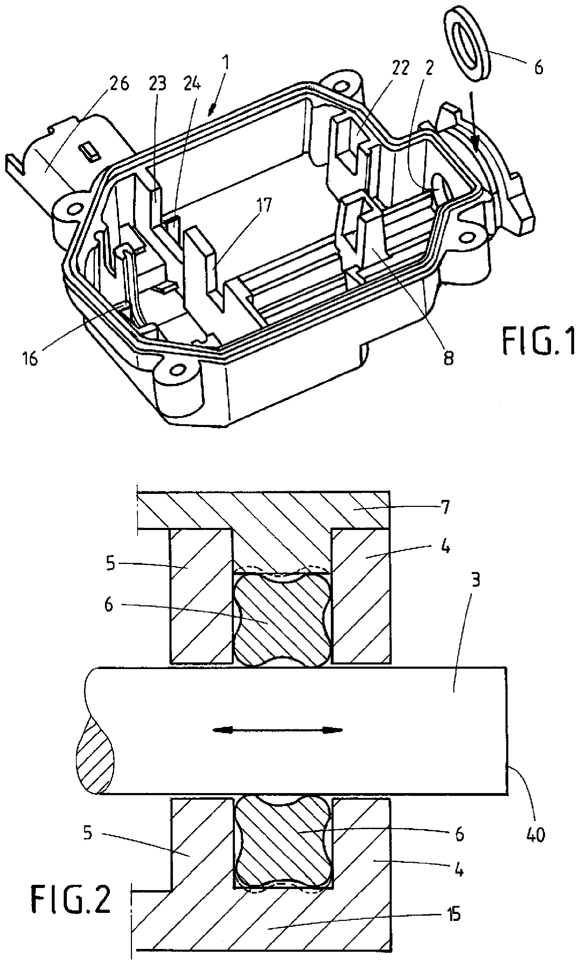

Figur 1 gezeigt eine Gehäuseschale 1 eines Gehäuses eines erfindungsgemäßen Stellantriebs. Die Gehäuseschale 1 umfasst eine Durchgangsöffnung 2 durch die Gehäuseschale 1 hindurch für einen in der Figur 2 im Schnitt gezeigten Riegel 3. Der Durchgang 2 wird durch eine Doppelwand 4, 5 gebildet, die in der Figur 2 im Schnitt dargestellt ist. Die Doppelwand 4,5 ist nach einer Seite offen. Durch diese offene Seite hindurch wird wie in der Figur 1 angedeutet ein Dichtring 6 hineingesteckt. Im Schnitt weist der Dichtring eine X-Form auf, die in der Figur 2 dargestellt ist. Der Abstand zwischen den Innenseiten der Doppelwand 4,5 entspricht der Breite des Dichtrings 6. Der Dichtring 6 kann daher zumindest weitgehend reibungsfrei und damit problemlos zwischen die Wände 4 und 5 der Doppelwand eingesetzt werden, wie dies in der Figur 2 im Schnitt gezeigt wird. In der Figur 2 werden die Dimensionen des Dichtrings im komprimierten Zustand gezeigt. Wird die in die Doppelwand hineinführende Öffnung durch einen Wandbereich 7 einer weiteren Gehäuseschale verschlossen, so reicht wie durch die gestrichelten Linien angedeutet die Höhe des dann zur Verfügung stehenden Raumes innerhalb der Doppelwand 4,5 nicht aus, um den Dichtring im entspannten Zustand darin unterzubringen, ohne ihn also zusammenzupressen. Wird also die in die Doppelwand 4,5 hinein führende Öffnung mit dem Wandbereich 7 verschlossen, so drückt der Wandbereich 7 den Dichtring 6 in Richtung Riegel 3, wenn dieser durch die Durchgangsöffnung 2 hindurch reicht. In gleicher Weise wirkt der Wandbereich 15 der Gehäuseschale 1. Der Dichtring 6 wird damit nicht nur in Richtung Riegel 3 gedrückt, sondern die X förmigen Enden des Dichtrings werden zugleich gespreizt und so gegen die Wände 4 und 5 der Doppelwand gedrückt. Wird der Dichtring 6 auf diese Weise gepresst innerhalb der Doppelwand 4, 5 gehalten, so sorgt der Dichtring 6 besonders zuverlässig und langlebig für eine wasserdichte Abdichtung des besonders problematischen Durchgangsbereichs für den Riegel 3. Die X-förmigen Enden des Dichtrings 6 liegen dann paarweise dicht und umlaufend bandförmig oder linienförmig an und zwar am Riegel 3, an den Wänden 4 und 5 sowie an den Wandbereichen 7 und 15, die dem Riegel 3 gegenüberliegen. Durch die Öffnung 2 hindurch kann dann kein Wasser in das Innere des Gehäuses des Stellantriebs gelangen und zwar vor allem selbst dann nicht, wenn der Riegel 3 linear durch einen Antrieb verschoben wird.

Im Schnitt verläuft die Kontur des Dichtrings ausschließlich bogenförmig, also gerundet. Kanten, die ein Brechen fördern könnten, sind also nicht vorhanden.

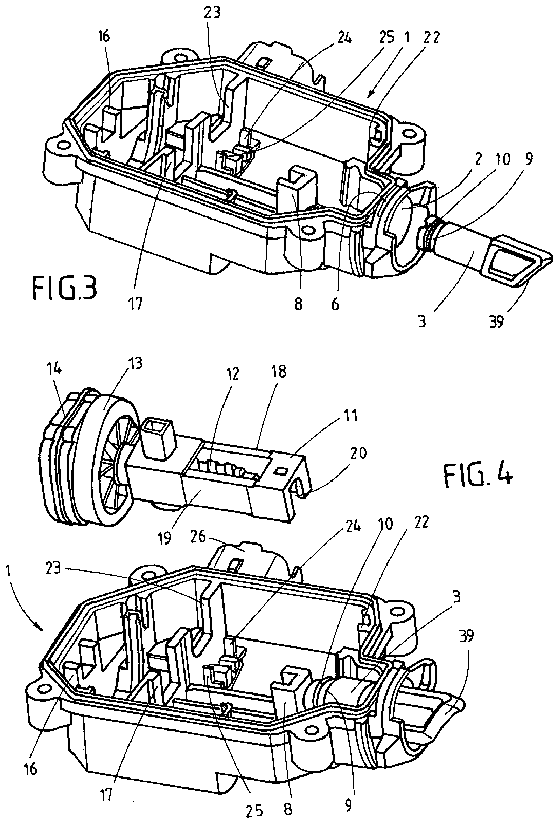

Ist der Dichtring 6 in die Doppelwand 4,5 eingesetzt worden, so wird im Anschluss daran der Riegel 3 wie anhand der Figuren 3 und 4 dargestellt durch die Öffnung 2 hindurch geschoben. Um die Montage zu erleichtern, gibt es im Inneren der Gehäuseschale 1 eine Lagerung 8 für eine Spindel, die zugleich als Anschlag für den Riegel 3 dient. Wird also der Riegel 3 ausgehend von der in der Figur 3 gezeigten Stellung durch die Öffnung 2 hindurch geschoben, so hat er seine Montageposition erreicht, sobald dieses Hineinschieben durch den Anschlag 8 gestoppt wird.

Der Riegel 3 umfasst eine umlaufende Nut 9, in der ein elastischer Ring 10 gehalten ist. Die Breite des elastischen Rings 10 ist geringer als die Breite der Nut 9, damit ein Wandbereich eines Schlittens in die Nut hinein gelangen kann.

Ist der Riegel 3 bis zum Anschlag 8 durch die Öffnung 2 hindurch geschoben worden, so wird wie in der Figur 4 dargestellt im Anschluss daran eine Baugruppe von oben in die Gehäuseschale 1 hinein eingesetzt, die einen Schlitten 11, eine Spindel 12, ein mit der Spindel 12 fest verbundenes Antriebsrad 13 sowie optional eine Federkassette 14 umfasst. Das Außengewinde der Spindel 12 ist durch ein damit korrespondierendes Innengewinde des Schlittens 11 hindurchgeführt, um eine Drehbewegung der Spindel in eine lineare Bewegung des Schlittens 11 umwandeln zu können. Die Federkassette 14 enthält eine Feder, die durch Drehen des Antriebsrads 13 weiter vorgespannt werden kann oder aber die aufgrund ihrer Vorspannung in der Lage ist, das Antriebsrad 13 in die entgegengesetzte Richtung zu drehen. Neben der auch als Anschlag dienenden Lagerung 8 umfasst die Gehäuseschale 1 weitere Lagerungen 16 und 17 für die drehbare Lagerung der Spindel 12. Ist die vorgenannte Baugruppe in die Gehäuseschale 1 eingesetzt, so grenzt die Lagerung 17 von der einen Seite an das Antriebsrad 13 und die Lagerung 16 von der anderen Seite an die Federkassette 14. In der Lagerung 8 wird das Ende der Spindel 12 drehbar gelagert, welches dem Riegel 3 zugewandt ist.

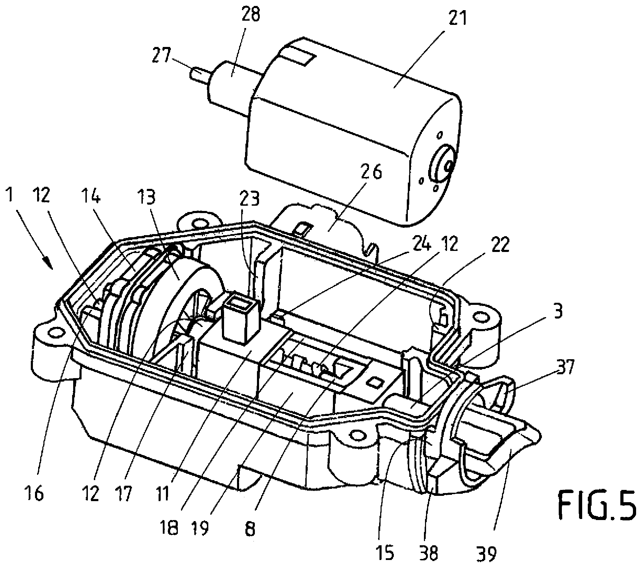

Der Schlitten 11 verfügt über zwei seitliche Begrenzungen 18 und 19, die im eingebauten Zustand an dem Anschlag 8 seitlich anliegen und so eine drehfeste Lagerung des Schlittens 11 bewirken. Durch die seitlichen Begrenzungen 18 und 19 entsteht eine Art Langloch auf der Oberseite des Schlittens, in welches der Anschlag 8 wie in der Figur 5 gezeigt hineinreicht, wenn die vorgenannte Baugruppe in die Gehäuseschale 1 eingesetzt ist.

Der Schlitten 11 verfügt über einen U-förmigen Wandbereich 20, der in die Nut 9 des Riegels 3 hinein gelangt, wenn die vorgenannte Baugruppe in die Gehäuseschale 1 eingesetzt wird und sich der Riegel 3 in seiner Montageposition befindet. Der aus elastischem Material bestehende Ring 10 wird durch das Einsetzen etwas zusammengedrückt und trägt so dafür Sorge, dass der Wandbereich 20 im eingesetzten Zustand spielfrei in der Nut 9 gehalten wird. Es entsteht so eine formschlüssige, spielfreie Verbindung zwischen dem Schlitten 11 und dem Riegel 3.

Ist die vorgenannte Baugruppe in die Gehäuseschale 1 eingesetzt worden, so wird im Anschluss daran ein Elektromotor 21 eingesetzt, der als elektrisches Antriebsmittel dient. Um den Elektromotor 21 geeignet halten und elektrisch kontaktieren zu können, weist die Gehäuseschale 1 Lagerungen 22 und 23 sowie vorstehende elektrische Kontakte 24 und 25 wie in den Figuren 1, 3, 4 und 5 gezeigt auf. Über eine Anschlussbuchse 26 können die elektrischen Kontakte 24 und 25 und damit der Elektromotor 21 mit Strom versorgt werden.

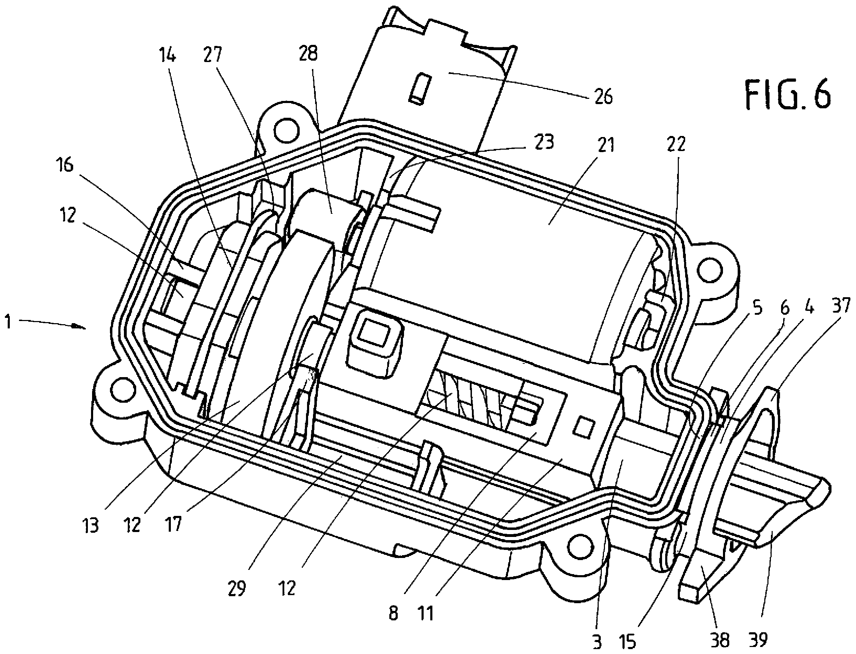

Der Elektromotor 21 umfasst eine Welle 27 mit einer damit verbundenen Antriebsrolle 28, die eine gummierte Oberfläche aufweisen kann. Ist der Elektromotor 21 in die Gehäuseschale 1 eingesetzt worden, so liegt die Antriebsrolle 28 zum Beispiel reibschlüssig an dem Antriebsrad 13 an, wie in der Figur 6 gezeigt wird. Wird die Antriebsrolle 28 durch den Elektromotor 21 gedreht, so überträgt sich diese Drehbewegung aufgrund der reibschlüssigen Verbindung auf das Antriebsrad 13. Der Durchmesser der Antriebsrolle 28 ist klein im Vergleich zum Durchmesser des Antriebsrads 13, umso für eine geeignete Übersetzung Sorge zu tragen. Anstelle einer reibschlüssigen Verbindung kann auch eine Zahnradverbindung vorgesehen sein.

In einen Raum 29 in der Gehäuseschale 1, der an den Schlitten 11 angrenzt, kann optional ein Sensor, so zum Beispiel ein Mikroschalter eingesetzt werden, mit dem die Position des Schlittens 11 und damit die Position des Riegels 3 detektiert werden kann.

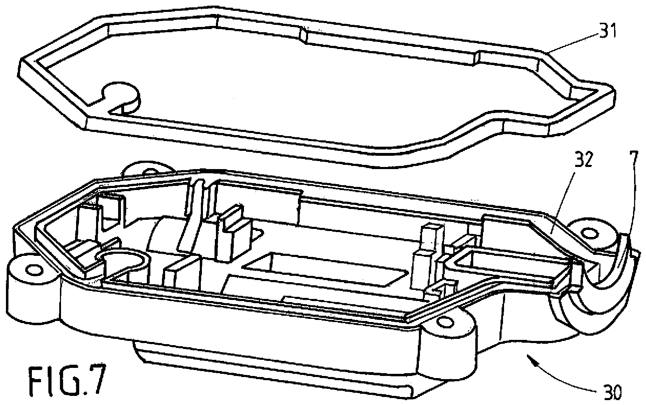

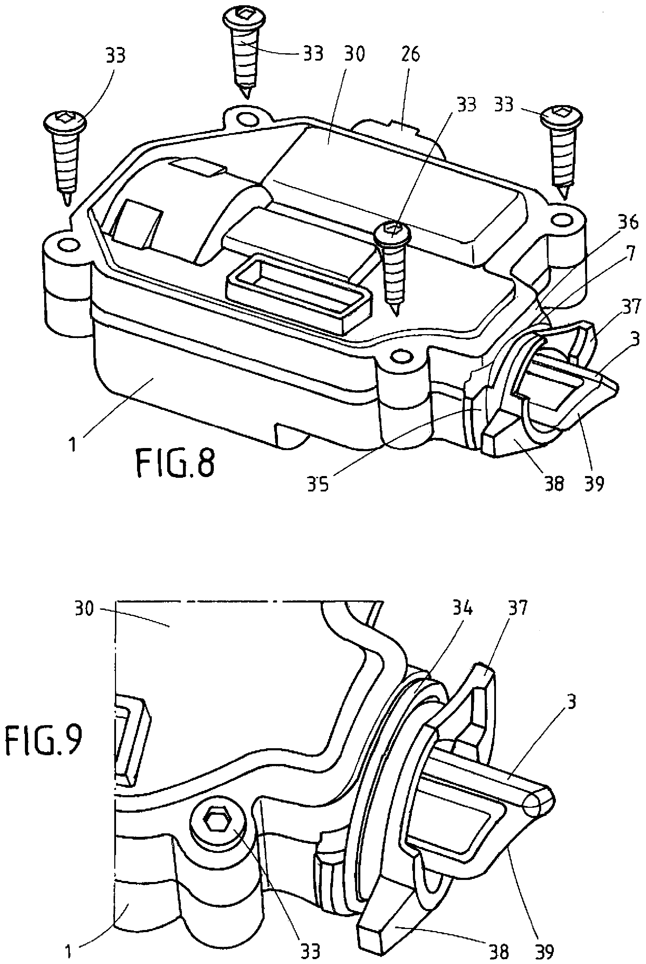

Im Anschluss daran wird nun eine umlaufende Dichtung 31 in eine Nut 32 einer in der Figur 7 gezeigten Gehäuseschale 30 eingesetzt oder hineingespritzt. Die Gehäuseschale 30 wird nun mit der Gehäuseschale 1 wie in der Figur 8 gezeigt verbunden und mithilfe von Schrauben 33 wie dargestellt verschraubt. Anstelle von Schrauben 33 können aber auch andere Verbindungmittel vorgesehen sein, so zum Beispiel Nieten oder aber eine Klipsverbindung mit federnende, an einer Gehäuseschale befestigten hakenförmigen Laschen, die in korrespondierende Ausnehmungen bei der anderen Gehäuseschale für ein Verbinden einrasten können.

Abschließend kann nun ein weiterer, aus elastischem Material bestehender Dichtring 34 - wie in der Figur 9 dargestellt - angebracht werden. Der Dichtring 34 liegt dann an Wandbereichen 35 und 36 an und kann gegen diese Wandbereiche 35 und 36 gepresst werden, wenn der Stellantrieb mithilfe von Flügeln 37 und 38 einer Bajonettverbindung mit einem weiteren Bauteil verbunden wird. Die Flügel 37 und 38 der Bajonettverbindung sind mit der Gehäuseschale 1 einstückig verbunden. Der Wandbereich 35 ist ebenfalls Teil der einstückig hergestellten Gehäuseschale 1. Der Wandbereich 36 ist Teil der einstückig hergestellten Gehäuseschale 30. Der Innendurchmesser des weiteren Dichtrings 34 liegt einerseits an dem Wandbereich 7 der Gehäuseschale 30 an sowie andererseits an dem Wandbereich 15 der Gehäuseschale 1. Durch die Wandbereiche 7 und 15 wird der Dichtring 6 gepresst gehalten. Die Wandbereiche 35 und 36 stehen von den Wandbereichen 7 und 15 senkrecht ab. Der weitere Dichtring 34 weist bevorzugt einen relativ kleinen Durchmesser auf, so dass dieser im vorgespannten, gedehnten Zustand mit seinem Innendurchmesser an den Wandbereichen 7 und 15 anliegt. Insbesondere in diesem Fall trägt der weitere, dann gedehnte Dichtring 34 dazu bei, dass die Wandbereiche 7 und 15 durch den komprimierten Dichtring 6 mit dem X-förmigen Querschnitt nicht auseinander gedrückt werden.

Das aus dem Stellantrieb heraus bewegbare Ende 39 des Riegels 3 kann rampenförmig sein, wie beispielsweise in den Figuren 3, 4, 5, 6, 8 und 9 gezeigt wird. Es kann aber auch ein planes Ende 40 vorgesehen sein, wie in der Figur 2 gezeigt wird. Da der Riegel 3 relativ einfach und klein gebaut ist, können ohne großen technischen Aufwand unterschiedliche Riegelformen bereitgestellt und in Abhängigkeit vom gewünschten Einsatzzweck verwendet werden. In Abhängigkeit von den jeweils optional auswählbaren Komponenten wie Riegel 3, Sensor, Federkassette 14 oder weiterer Dichtring 34 können Stellantriebe mit unterschiedlichen Eigenschaften oder für unterschiedliche Anwendungszwecke bereitgestellt werden, ohne hierfür einen großen technischen Aufwand betreiben zu müssen.

Die Montage kann fast ohne Werkzeuge durchgeführt werden. Wird anstelle einer Schraubverbindung eine Rastverbindung vorgesehen, so ist kein Werkzeug für die Montage erforderlich. Jeder Montageschritt ist einfach und ohne komplizierte Handhabung zu bewerkstelligen. Die Zahl der Teile ist sehr gering. Daher kann der Stellantrieb auch sehr klein und leicht sein. Der Stellantrieb ist sehr zuverlässig sowie dauerhaft gegen das Eindringen von Feuchtigkeit oder Staub geschützt. Durch Austausch von einzelnen, einfach gehaltenen Komponenten kann der Stellantrieb an unterschiedliche Bedürfnisse angepasst werden. Da die optional oder wahlweise vorgesehenen Komponenten klein sind, ist der Lagerraum entsprechend klein, der für die Bereithaltung von unterschiedlichen Komponenten vorzusehen ist.

### Bezugszeichenliste

- 1:: Gehäuseschale
- 2:: Durchgangsöffnung
- 3:: Riegel
- 4, 5:: Doppelwand
- 6:: Dichtring mit X-förmigem Querschnitt
- 7:: Wandbereich
- 8:: Anschlag, Lagerung für Spindel
- 9:: umlaufende Nut
- 10:: Ring in umlaufender Nut
- 11:: Schlitten
- 12:: Spindel
- 13:: Antriebsrad
- 14:: Federkassette
- 15:: Wandbereich
- 16, 17:: Lagerungen für Spindel
- 18, 19:: Begrenzungen
- 20:: Wandbereich 20
- 21:: Elektromotor
- 22, 23:: Lagerungen
- 24, 25:: elektrische Kontakte
- 26:: Anschlussbuchse
- 27:: Welle
- 28:: Antriebsrolle
- 29:: Raum
- 30:: Gehäuseschale
- 31:: Dichtung
- 32:: umlaufende Nut
- 33:: Schraube
- 34:: weiterer Dichtring
- 35, 36:: Wandbereiche
- 37, 38:: Flügel für eine Bajonettverbindung
- 39:: rampenförmiges Riegelende
- 40:: planes Riegelende

## Patentansprüche

1. Stellantrieb für ein Kraftfahrzeug mit einem bewegbaren Riegel (3), der aus einem abgedichteten Gehäuse (1, 30) des Stellantriebs zumindest teilweise heraus sowie in das Gehäuse (1, 30) hinein bewegt werden kann, mit einem Antrieb (14, 21) für ein Bewegen des Riegels (3), mit einer aus verformbaren Material bestehenden Ringdichtung (6), durch die der Riegel (3) hindurchgeführt ist, wobei das Gehäuse (1, 30) des Stellantriebs durch zwei Gehäuseschalen (1, 30) gebildet wird, die mithilfe einer umlaufenden Dichtung (31) dicht miteinander verbunden sind, **dadurch gekennzeichnet, dass** die Ringdichtung (6) einen X-förmigen Querschnitt aufweist und / oder dass wenigstens zwei bandförmige oder linienförmige Bereiche die Ringdichtung (6) umlaufend an dem Riegel (3) dicht anliegen, wobei der Stellantrieb so eingerichtet ist, dass die Ringdichtung (6) durch einen Wandbereich (7) einer der Gehäuseschalen (30) in Richtung des Riegels (3) gepresst oder gedrückt wird.

2. Stellantrieb nach dem vorhergehenden Anspruch, **dadurch gekennzeichnet, dass** die Ringdichtung (6) innerhalb einer Doppelwand (4, 5) des Gehäuses (1, 30) untergebracht ist und zwar insbesondere in gepresster Form.

3. Stellantrieb nach einem der vorhergehenden Ansprüche, **dadurch gekennzeichnet, dass** der Innendurchmesser der Ringdichtung (6) kleiner ist als der daran angrenzende Außendurchmesser des Riegels (3).

4. Stellantrieb nach einem der vorhergehenden Ansprüche, **dadurch gekennzeichnet, dass** der Riegel (3) durch eine Durchgangsöffnung (2) des Gehäuses (1, 30) hindurchgeführt ist, die durch einen einstückigen Wandbereich des Gehäuses (1, 30) gebildet ist und insbesondere mit einer Gehäuseschale (1) des Gehäuses (1, 30) einteilig verbunden ist.

5. Stellantrieb nach einem der vorhergehenden Ansprüche, **gekennzeichnet durch** eine weitere Ringdichtung (34), die mit ihrem Innendurchmesser an zwei Gehäuseschalen (1, 30) des Gehäuses anliegt und die um eine Durchgangsöffnung (2) herum geführt ist, durch die der Riegel (3) hindurchgeführt ist.

6. Stellantrieb nach einem der vorhergehenden Ansprüche, **gekennzeichnet durch** eine Verbindungseinrichtung für ein Verbinden mit einem weiteren Bauteil, durch die der Riegel (3) hindurchgeführt ist, und zwar insbesondere einer Bajonettverbindungseinrichtung (37, 38).

7. Stellantrieb nach einem der vorhergehenden Ansprüche, **dadurch gekennzeichnet, dass** der Riegel (3) durch Formschluss mit einem Schlitten (11) des Stellantriebs verbunden ist.

8. Stellantrieb nach dem vorhergehenden Anspruch, **dadurch gekennzeichnet, dass** die Formschlussverbindung zwischen dem Schlitten (11) und dem Riegel (3) durch eine Nut (9) im Riegel (3) sowie durch einen in die Nut (9) hineinreichenden Wandbereich (20) des Schlittens (11) gebildet ist.

9. Stellantrieb nach dem vorhergehenden Anspruch, **gekennzeichnet durch** einen Ring (10) aus verformbarem, insbesondere aus elastischem oder plastischem Material, der in der Nut (9) gehalten ist.

10. Stellantrieb nach dem vorhergehenden Anspruch, **dadurch gekennzeichnet, dass** der Ring (10) gegen den in die Nut (9) hineinreichenden Wandbereich (20) des Schlittens gedrückt ist.

11. Stellantrieb nach einem der vorhergehenden Ansprüche, **gekennzeichnet durch** eine drehbar gelagerte Spindel (12) für das Bewegen des Riegels (3), mit wenigstens einer Lagerung für die Spindel, vorzugsweise mit drei Lagerungen (8, 16, 17) für die Spindel (12).

12. Stellantrieb nach dem vorhergehenden Anspruch, **dadurch gekennzeichnet, dass** wenigstens ein Ende der Spindel (12), vorzugsweise beide Enden der Spindel (12) durch jeweils eine Lagerung (8, 16) drehbar gehalten sind.

13. Stellantrieb nach einem der beiden vorhergehenden Ansprüche, **dadurch gekennzeichnet, dass** eine Lagerung (8) der Spindel (12) zugleich einen Anschlag und / oder eine Führung für einen Schlitten (11) und/ oder einen Anschlag für den Riegel (3) bildet, der durch eine Drehung der Spindel (12) linear bewegt wird.

14. Verfahren zur Montage eines Stellantriebs nach einem der vorhergehenden Ansprüche, bei dem ein Riegel (3) durch eine Durchgangsöffnung (2) einer Gehäuseschale (1) hindurch geschoben wird und zwar bevorzugt bis zu einem Anschlag (8) und im Anschluss daran ein Schlitten (11) in die Gehäuseschale (1) eingesetzt wird und dadurch mit dem Riegel (3) formschlüssig verbunden wird.

15. Verfahren nach dem vorhergehenden Anspruch, bei dem eine Ringdichtung (6) zwischen eine Doppelwand (4, 5) einer Gehäuseschale (1) gebracht wird und im Anschluss daran der Riegel (3) durch die Durchgangsöffnung (2) hindurch geschoben wird.

16. Verfahren nach einem der beiden vorhergehenden Verfahrensansprüche, bei dem eine Baugruppe eingesetzt wird, die den Schlitten (11), eine damit drehbar verbundene Spindel (12) nebst einem mit der Spindel (12) verbundenen Antriebsrad (13) umfasst.

17. Verfahren nach dem vorhergehenden Anspruch, bei dem im Anschluss an das Einsetzen der Baugruppe ein Elektromotor (21) mit Antriebsrolle (28) eingesetzt wird, die im eingesetzten Zustand derart an das Antriebsrad (13) grenzt, dass die Antriebsrolle (28) das Antriebsrad (13) zu drehen vermag.

## Claims

1. Actuating drive for a motor vehicle comprising a movable locking bolt (3), which can be moved at least partially out of a sealed housing (1, 30) of the actuating drive and which can be moved into the housing (1, 30), a drive (14, 21) for moving the locking bolt (3), an annular seal (6), which consists of deformable material and through which the locking bolt (3) is guided, wherein the housing (1, 30) of the actuating drive is formed by two housing shells (1, 30), which are tightly connected together by means of a circumferential seal (31), **characterized in that** the annular seal (6) has an X-shaped cross-section and/or **in that** at least two strip-shaped or linear areas of the annular seal (6) fit to the locking bolt (3) circumferentially in a sealed manner, wherein the actuating drive is arranged in such a way that the annular seal (6) is pressed or squeezed in the direction of the locking bolt (3) by a wall area (7) of one of the housing shells (30).

2. Actuating drive according to the preceding claim, **characterized in that** the annular seal (6) is accommodated within a double wall (4, 5) of the housing (1, 30), in particular in a squeezed manner.

3. Actuating drive according to one of the preceding claims, **characterized in that** the inner diameter of the annular seal (6) is smaller than the adjacent outer diameter of the locking bolt (3).

4. Actuating drive according to one of the preceding claims, **characterized in that** the locking bolt (3) is guided through a through opening (2) of the housing (1, 30) which is formed by a one-piece wall area of the housing (1, 30) and which is in particular connected to a housing shell (1) of the housing (1, 30) in a one-piece manner.

5. Actuating drive according to one of the preceding claims, **characterized by** a further annular seal (34) which fits with its inner diameter against two housing shells (1, 30) of the housing and which is guided around a through opening (2) through which the locking bolt (3) is guided.

6. Actuating drive according to one of the preceding claims, **characterized by** a connecting device for connection to a further component through which the locking bolt (3) is guided, in particular a bayonet connecting device (37, 38).

7. Actuating drive according to one of the preceding claims, **characterized in that** the locking bolt (3) is connected by positive locking to a carriage (11) of the actuating drive.

8. Actuating drive according to the preceding claim, **characterized in that** the positive locking connection between the carriage (11) and the locking bolt (3) is formed by a groove (9) in the locking bolt (3) and by a wall region (20) of the carriage (11) which extends into the groove (9).

9. Actuating drive according to the preceding claim, **characterized by** a ring (10) of deformable material, in particular of elastic or plastic material, held in the groove (9).

10. Actuating drive according to the preceding claim, **characterized in that** the ring (10) is pressed against the wall region (20) of the carriage which extends into the groove (9).

11. Actuating drive according to one of the preceding claims, **characterized by** a rotatably mounted spindle (12) for the moving of the locking bolt (3), with at least one bearing for the spindle, preferably with three bearings (8, 16, 17) for the spindle (12).

12. Actuating drive according to the preceding claim, **characterized in that** at least one end of the spindle (12), preferably both ends of the spindle (12), are held rotatably by one bearing (8, 16) each.

13. Actuating drive according to one of the two preceding claims, **characterized in that** a bearing (8) of the spindle (12) forms at the same time a stop and/or a guide for a carriage (11) and/or a stop for the locking bolt (3), which is moved linearly by a rotation of the spindle (12).

14. Method for assembling an actuating drive according to one of the preceding claims, in which a locking bolt (3) is pushed through a through opening (2) of a housing shell (1), preferably up to a stop (8), and subsequent to that, a carriage (11) is inserted into the housing shell (1) and is thereby positively connected to the locking bolt (3).

15. Method according to the preceding claim, in which an annular seal (6) is brought between a double wall (4, 5) of a housing shell (1) and the locking bolt (3) is then pushed through the through opening (2).

16. Method according to one of the two preceding method claims, in which an assembly is inserted which comprises the carriage (11), a spindle (12) rotatably connected thereto, and a drive wheel (13) connected to the spindle (12).

17. Method according to the preceding claim, in which, subsequent to the insertion of the assembly, an electric motor (21) with drive roller (28) is inserted, which in the inserted state adjoins the drive wheel (13) in such a way that the drive roller (28) is able to rotate the drive wheel (13).

## Revendications

1. Actionneur destiné à un véhicule automobile, comportant un boulon mobile (3) qui peut être déplacé au moins partiellement hors d'un boîtier étanche (1, 30) de l'actionneur et dans le boîtier (1, 30), comportant un entraînement (14, 21) pour déplacer le boulon (3), un joint annulaire (6) en matériau déformable à travers lequel le boulon (3) est passé, le boîtier (1, 30) de l'actionneur étant constitué de deux coquilles (1, 30) qui sont reliés l'un à l'autre de manière étanche au moyen d'un joint circonférentielle (31), **caractérisé en ce que** le joint annulaire (6) présente une section transversale en forme de X et/ou **en ce qu'**au moins deux zones en forme de bande ou linéaires du joint annulaire (6) sont en appui circonférentiellement contre le boulon (3), l'actionneur est disposé de telle sorte que le joint annulaire (6) est pressé ou serré par une zone de paroi (7) de l'une des coquilles de boîtier (30) dans la direction du boulon (3).

2. Actionneur selon la revendication précédente, **caractérisé en ce que** le joint annulaire (6) est logé au sein d'une double paroi (4, 5) du boîtier (1, 30), et surtout sous forme comprimée.

3. Actionneur selon l'une des revendications précédentes, **caractérisé en ce que** le diamètre intérieur du joint annulaire (6) est inférieur au diamètre extérieur adjacent du boulon (3).

4. Actionneur selon l'une des revendications précédentes, **caractérisé en ce que** le boulon (3) est passé à travers une ouverture de passage (2) du boîtier (1, 30) qui est formée par une zone de paroi monobloc du boîtier (1, 30) et en particulier est relié d'un seul tenant à une coquille de boîtier (1) du boîtier (1, 30).

5. Actionneur selon l'une des revendications précédentes, **caractérisé par** un autre joint annulaire (34) qui est en appui avec son diamètre intérieur contre deux coquilles de boîtier (1, 30) du boîtier et qui est passé autour d'une ouverture de passage (2) à travers laquelle le boulon (3) est passé.

6. Actionneur selon l'une des revendications précédentes, **caractérisé par** un dispositif de liaison pour la liaison à un autre composant à travers lequel le boulon (3) est passé, en particulier un dispositif de liaison à baïonnette (37, 38).

7. Actionneur selon l'une des revendications précédentes, **caractérisé en ce que** le boulon (3) est relié par engagement positif à un coulisseau (11) de l'actionneur.

8. Actionneur selon la revendication précédente, **caractérisé en ce que** la liaison par engagement positif entre le coulisseau (11) et le boulon (3) est formée par une rainure (9) dans le boulon (3) et par une zone de paroi (20) du coulisseau (11) s'étendant dans la rainure (9).

9. Actionneur selon la revendication précédente, **caractérisé par** un anneau (10) en matière déformable, en particulier en matière élastique ou plastique, qui est maintenue dans la rainure (9).

10. Actionneur selon la revendication précédente, **caractérisé en ce que** l'anneau (10) est pressé contre la zone de paroi (20) du coulisseau qui s'étend dans la rainure (9).

11. Actionneur selon l'une des revendications précédentes, **caractérisé par** une broche (12) montée rotative pour déplacer le boulon (3), avec au moins un palier pour la broche, de préférence avec trois paliers (8, 16, 17) pour la broche (12).

12. Actionneur selon la revendication précédente, **caractérisé en ce qu'**au moins une extrémité de la broche (12), de préférence les deux extrémités de la broche (12), sont maintenues en rotation par un palier (8, 16) respectivement.

13. Actionneur selon l'une des deux revendications précédentes, **caractérisé en ce qu'**un palier (8) de la broche (12) simultanément forme une butée et/ou un guidage pour un coulisseau (11) et/ou une butée pour le boulon (3) qui est déplacé linéairement par une rotation de la broche (12).

14. Procédé de montage d'un actionneur selon l'une des revendications précédentes, dans lequel un boulon (3) est poussé à travers une ouverture traversante (2) d'une coquille de boîtier (1), et de préférence jusqu'à une butée (8), et ensuite un coulisseau (11) est inséré dans la coquille de boîtier (1) et ainsi est relié au boulon (3).

15. Procédé selon la revendication précédente, dans lequel un joint annulaire (6) est amené entre une double paroi (4, 5) d'une coquille de boîtier (1) et le boulon (3) est ensuite poussé à travers l'ouverture (2).

16. Procédé selon l'une des deux revendications de procédé précédentes, dans lequel un ensemble est utilisé qui comprend le coulisseau (11), une broche (12) reliée en rotation à celui-ci, et une roue d'entraînement (13) reliée à la broche (12).

17. Procédé selon la revendication précédente, dans lequel, après l'insertion de l'ensemble, on utilise un moteur électrique (21) avec un rouleau d'entraînement (28) qui, à l'état inséré, borde la roue d'entraînement (13) de telle manière que le rouleau d'entraînement (28) puisse faire tourner la roue d'entraînement (13).
